# EUROPEAN PATENT SPECIFICATION

(11) **EP 2 531 804 B1**
(45) Date of publication and mention of the grant of the patent: **29.08.2018**
(21) Application number: 11737858.8
(22) Date of filing: 01.02.2011
(51) Int. Cl.: F41H 5/04, B32B 18/00, F41H 5/02, C04B 35/573, C04B 35/626, C04B 35/80, C04B 35/82

(54) **CERAMIC BASED ARMOR AND PROCESS FOR PRODUCING SAID ARMOR**
PANZERUNG AUF KERAMIKBASIS UND VERFAHREN ZUR IHRER HERSTELLUNG
BLINDAGE À BASE DE CÉRAMIQUE ET PROCÉDÉ POUR PRODUIRE CE BLINDAGE

(30) Priority: 01.02.2010 US 300269 P
(43) Date of publication of application: 12.12.2012
(73) Proprietor: SGL Carbon SE, 65201 Wiesbaden (DE)
(72) Inventor: KIENZLE, Andreas, 86753 Mottingen ot Balgheim (DE); HINES, Roberta, Long Beach, CA 90814 (US); MAXWELL, Michael, Long Beach, CA 90815 (US)
(86) International application number: PCT/US2011/023336
(87) International publication number: WO 2011/094740

(56) References cited:
- US-A- 5 007 326
- US-A- 5 007 326
- US-A- 5 221 807
- US-A1- 2003 118 757
- US-A1- 2004 216 595
- US-A1- 2005 217 471
- US-A1- 2008 289 087

## Description

### Technical Field:

The process of the invention relates particularly to the production of ceramic composite materials which are reinforced with carbon fibers and have recesses and hollow spaces and which are converted by infiltration with silicon melts as to react with at least part of the carbon to form silicon carbide (SiC) into composite materials which are with carbon fibers and have an SiC-containing or carbon- and SiC-containing matrix (C/SiC or C/C-Sic materials). These composite materials are employed, in particular, in armor panels, brake disks, clutch disks and friction disks and also as construction materials which are resistant to high temperatures, shock and abrasion, as is shown in US 2003/0118757.

A process for producing C/SiC components is known from, for example, German Published Application DE 197 10 105 A and includes, inter alia, the following steps:
preparation of a press molding compound of carbon-containing fibers or fiber bundles which may be coated with a coating and fillers and/or binders such as resins and/or pitch, shaping of the mixture under pressure and at elevated temperature and carbonisation of the carbon-containing fillers and binders to produce a shaped body, in particular a shaped body comprising carbon reinforced with carbon fibers (C/C) and, if appropriate, subsequent graphitization.

In particular, the invention relates to a process for producing a porous fiber-reinforced carbon-containing shaped body which has recesses or hollow spaces and is close to the final shape, in particular a fiber-reinforced C/C body ("CFC" or "CFRC"=carbon fiber reinforced carbon) which is shaped from binder-containing fiber compositions by means of a pressing procedure using pressing cores and is converted into C/C in a subsequent thermal treatment, and also, if appropriate, the densification of a porous fiber-reinforced carbon-containing shaped body to form a ceramic matrix, in particular by infiltration of the C/C body with liquid metal, if appropriate with subsequent heat treatment, so that the matrix then comprises metals and the metal carbides formed by reaction with the carbon, possibly together with residual unreacted carbon. The use of fiber-reinforced ceramics as a material for brake disk applications has been found to be a solution to these problems. Materials based on silicon carbide reinforced with carbon fibers (C/SiC) in particular have been found to be useful for this application. The advantages of this material are the lower density (thus reduced weight for a given volume), the high hardness and heat resistance up to about 1400° C. and, not least, the extremely high wear resistance, as shown by US 2003/0118757. The present invention relates to a defensive, ceramic based, applique armor for protecting a substrate which may be exposed to attack by projectiles, as defined by appended claim 1. Among the substrates to be protected by the use of the present invention are land vehicles (i.e. tanks, trucks, personnel transport vehicles), aircraft (i.e. airplanes, helicopters), architectural structures such as buildings, shelters, equipment enclosures and oceanic vehicles (i.e.boats, submarines), as shown by US 5,007,326. More particularly, the present invention relates to place single or multiple plate armor panels to be placed over a substrate to be protected from projectile attack. Said panels having holes therein which are set at obliquity. Further comprising an integral installation which may have structural mechanical properties which are contributed to the overall application. This could result in weight reduction, parts count reduction and system cost reduction. As shown by U.S. Patent No. 5,007,326 using the conventional multi-plate approach, material geometries and spacing between armor elements may be adjusted to induce ballistic projectiles to fracture and rotate about the incoming velocity vector. For example, one concept involves placing a multiplicity of holes within an armor element configuration. Given proper spacing between elements, the probability is great that an incoming projectile will strike the edge of a hole in the primary or first element, causing it to rotate before impacting the secondary or backup armor element. This approach requires a robust primary element so as to initiate rotation, and adequate air space between the primary and secondary elements to enable the projectile to rotate sufficiently before the second impact. Although effective as a system, it is difficult to decrease the weight of the primary element (while retaining performance), and a large air space is necessary between the primary element and the secondary element. As shown by U.S. Patent Application Publication No. No. US 2006/0162537 A1, lighter ceramics and improved substrate performance allow the production of reduced areal density elements, such that lighter armor can be produced to protect against a given threat. However, over the past twenty years, the decrease in areal density required to defeat AP threats has been incremental at best. New materials have resulted in small improvements in armor weight (i.e., areal density). To substantially reduce the weight of armor, including that worn by personnel, requires a significant decrease in areal density-much larger than that obtained to date, see U.S. Patent Application Publication No. No. US 2006/0162537 A1.

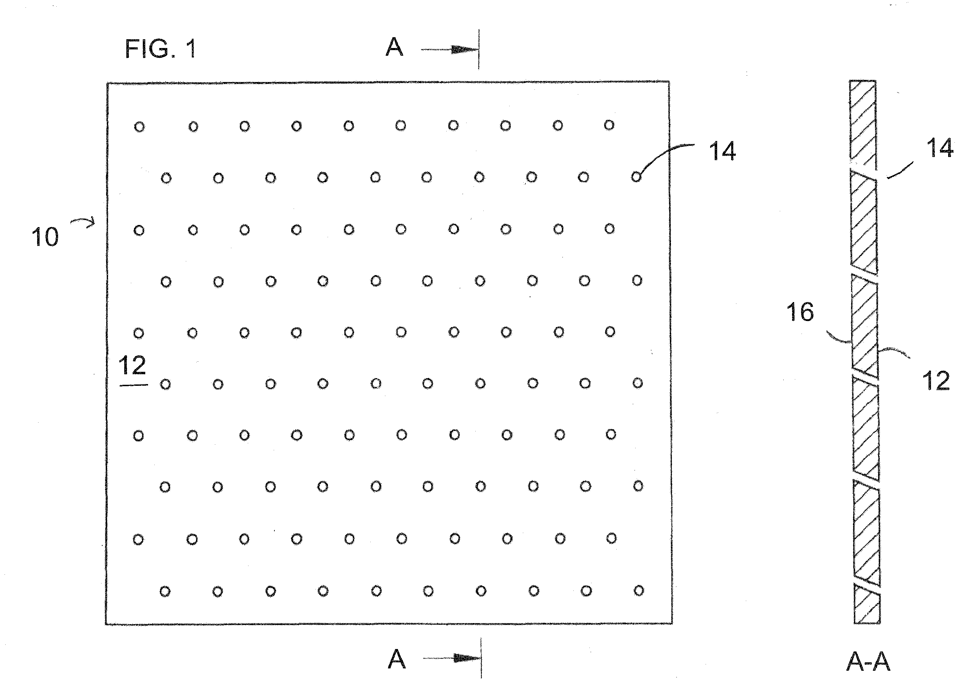

A specific type of armor which is well-known in the art is referred to generically as P900 armor. The P900 armors refer to a class of applique armors which consist of two metal plates of a predetermined thickness which are in a stacked configuration and which are spaced apart from one another. (See FIG. 1 which illustrates the prior art P900 armor.) said two-plate armor is further spaced a predetermined distance away from the substrate to be protected. Both of said metal plates have holes of various designs. These holes have been punched out or drilled in a perpendicular fashion through the armor plates. The holes in the two armor plates are arranged such that when a projectile penetrates the P900 plates, the projectile is broken due to the asymmetrical load placed on the projectile. The spacing to the substrate further amplifies projectile breakup which consequently allows the projectile effect to be more easily absorbed and withstood by the substrate, as shown by US 5,007,326. The well-known prior art P900 armor has previously been fabricated only from annealed, wrought steel plates. Said plates are mechanically punched or drilled to form the holes and subsequently straightened, heat treated and cut to the desired shape and size. This prior art process of making the P900 armor carries with it many disadvantages. For example, the use of punching or drilling techniques is limited by the thickness of the steel plate and the design of the holes to be punched or drilled. Moreover, the punching or drilling techniques produce excessive amounts of waste of steel plate (approximately 60%). The punching or drilling techniques further create sharp edges on the armor plates which make their handling difficult, as shown by U.S. Patent No. 5,007,326.

The use of a plurality of angled slots or louvers in applique armor constructions has been suggested in U.S. Patent No. 3,765,299 and U.S. Patent No. 4,036,104 (both issued to Pagano et al.). These patents teach a design commonly referred to in the art as a "ribbed applique." These patents, however, neither suggest the structure of the present invention nor the method of making the subject matter of the present invention.
The concept of applying an armor to a substrate wherein a stand-off distance is present between the two is taught in U.S. Patent No. 2,380,393 (issued to Berg). US 5,221,807 teaches an armor comprising a plate made of a fiber and ceramic matrix composite (C/SiC) having blind holes that are perpendicular to the surface of the front face and that do not open out into the rear face. Customary production processes also include such where the C/C body is densified via the liquid or gas phase with carbon precursors, namely substances which form carbon upon heating in the absence of oxidizing media, or by means of carbon, or the matrix comprising predominantly SiC, Si and C is produced by gas-phase infiltration (CVD, chemical vapor deposition, or CVI, chemical vapor infiltration) or by pyrolysis of Si-containing pre-ceramic polymers.

Present-day metallic brake disks frequently have ventilation slits or channels through which air flows within the disk so as to reduce the temperature of the disk and decrease wear of the friction lining under high stress. Such ventilation channels are also employed in brake disks based on C/SiC, particularly to lower the temperature so as to spare the brake linings and further components of the system.

One process for producing friction units of C/C- SiC material having ventilation channels, hollow spaces and recesses in which a structured porous carbon body close to the final shape is infiltrated with liquid silicon is known from EP-B 0 788 468. This process makes use of the fact that the liquid silicon infiltration and formation of the Si-and SiC-rich composite matrix occurs virtually without changes to the geometry of the C/C intermediate body, so that the hollow spaces and recesses can be produced in the relatively soft and readily machinable C/C intermediate body and not only in the very hard C/C-SiC composite ceramic. It is supposed, inter alia, that the hollow spaces and recesses be formed by means of soluble cores comprising polystyrene foam, e.g. Styropor®, or other rigid foams, by means of pyrolyzable cores comprising polyvinyl alcohol or by means of removable cores comprising rubber, metal or ceramic.

The polymers proposed there as core material are found to be too soft and thermally unstable for the press molding with thermal curing of the press molding compound employed. Treatment with solvents to remove the cores involves the risk of destroying the generally still very soft intermediate body. This risk is likewise present in the pyrolysis of the proposed polymer polyvinyl alcohol which on heating forms gaseous decomposition products within the preform; these gaseous products are given off copiously and can break the shaped body. Customary metals and ceramics are also unsuitable for the thermal processes for curing the pressed green body and its carbonization to form the C/C intermediate body owing to their generally unmatched thermo-physical properties.

In German Patent DE 198 24 571 C, a further process is proposed for producing hollow spaces in an object comprising C/SiC composite ceramics. The hollow spaces are formed during manufacture of the preform by pressing using cores of silicon, silicon alloys or Si/BN mixtures. The cores are not removed from the preform until the step of infiltration with liquid silicon, and serve as a source of silicon for the siliconization step. Before siliconization, the preform has to be heated and converted into a C/C intermediate body, with the organic constituents, for example binders, being decomposed and shrinkage of the preform occurring. This shrinkage leads to the preform shrinking onto the silicon-containing cores which in turn additionally undergo a thermal expansion due to heating. In general, undesirable stress is generated, and even fracture occurs in the preform as a result, both of which have to be avoided.

### Disclosure of the Invention:

The present invention is an applique armor according to claim 1, a device according to claim 5 and a process according to claim 9. The present invention relates to a process for producing hollow bodies comprising fiber-reinforced ceramic composite materials. The process of the invention relates particularly to the production of ceramic composite materials which are reinforced with carbon fibers and have recesses and hollow spaces and which are converted by infiltration with silicon melts as to react with at least part of the carbon to form silicon carbide. In the inventions this hard strong material is used to replace steel as a traditional armor material. Specifically we are replacing "P-900" armor with an armor fabricated with ceramic material. Other design refinements are possible as a result of this significant material change. Details and claims of P-900 are disclosed by William A. Gooch in US patent 5,007,326.

Said armor will enjoy a weight savings when compared to a similar panel without the holes. Said armor having a uniform areal density at all points across the central portion of the panel.

Said armor may be integral to the skin or structure instead of applique. Further comprising an integral installation which may have structural mechanical properties which are contributing to the overall application. This could result in weight reduction, parts count reduction and system cost reduction.

A defensive ceramic based armor panel fabricated where a ceramic precursor "green body" may be further shaped by machining additional detail such as: ribs, flanges, domes, holes, slots, threads and many other complex design details before final processing to bring the material to full strength and hardness.

The process of the invention relates particularly to the production of ceramic composite materials which are reinforced with carbon fibers and have recesses and hollow spaces and which are converted by infiltration with silicon melts as to react with at least part of the carbon to form silicon carbide (SiC) into composite materials which are with carbon fibers and have an SiC-containing or carbon- and SiC-containing matrix (C/SiC or C/C-Sic materials). These composite materials are employed, in particular, in armor panels, brake disks, clutch disks and friction disks and also as construction materials which are resistant to high temperatures and abrasion. The use of any ceramic material is within the scope of the present invention. Among the preferred ceramics is C/SiC, however other ceramic material and other fibers may be used, as shown in U.S. Patent Application Publication No. No. US 2003/0118757. This invention consists of a defensive armor with holes are sufficiently small so that a projectile is unable to pass through without disrupting the armor. Moreover, the holes of the defensive armor are molded at obliquity. Further comprising an integral installation which may have structural mechanical properties which contribute to the overall application performance. This could result in weight reduction, parts count reduction and system cost reduction.

The armor of the invention may contain an optional thin layer. Said optional layer may be positioned either within or external to the basic armor plate. The presence of an optional layer provides reinforcement protection against any projectile effect and aids in the breakup of a projectile. In addition, the optional layer, if positioned external to the armor plate, serves to simplify cleaning and painting of the armor plate on that external surface. Onto said optional thin, layer an optional hard facing material may be placed. Exemplary materials for said hard facing material may include carbon cloth, tungsten carbide particles, FeCr coating, FeCr/Mo/V surfacing, 1642 CrC surfacing or Ceramco Cr 7 C 3, as shown by U.S. Patent No. 5,007,326. Said material layer or layers could also include fiberglass, aramid, ultra high molecular weight polyethylene or other polymer materials.

The armor of the present invention may further comprise recessed pockets through which a bolt may be used to affix said armor to the substrate to be protected. Said bolts may be attached to tubular spacers wherein one end of the tubular spacers is attached directly to the substrate and the other end is attached to the armor through bolting means. These tubular spacers provide a predetermined stand-off distance between the armor and the substrate. The recessed pockets are molded during the process of making the armor. Said recessed pockets provide an armor which is more easily stored than the original prior art P900 armor design, as shown by U.S. Patent 5,007,326.

It is a further object of the invention to provide a method of fabricating said single plate armor so as to reduce the cost of production, eliminate scrap waste material, incorporate a mounting mechanism, reduce armor system weight and produce an armor having smoother edges.

It is a further object of the invention to produce an applique or an integral ceramic armor having holes, wherein said holes are not produced by a punching or drilling technique.

It is a further object of the invention to produce an armor which would reduce mounting time of the same.

It is a further object of the invention to produce an armor which would reduce total protections system and installation weight of the same.

Still a further object of the invention is to provide a defensive armor having a high performance against projectile attack.

In one embodiment, the present invention is a defensive, ceramic based, applique armor for covering and protecting a substrate which may be exposed to attack by projectiles, the applique armor comprising:
a flat or curved armor plate formed of ceramic material and having a first surface and a second surface;
said ceramic material being formed of silicon carbide with carbon fibers (C/SiC);
said ceramic material having a plurality of holes on at least one of said surfaces;
said holes having a diameter smaller than an anticipated bullet or ammunition projectile; said holes passing through the first surface into the plate a distance of 20-65% of the thickness; said holes being set obliquely relative to said at least one surface;
said holes formed by press molding, boring, drilling, or combinations thereof; and
a thin skin layer or multiple layers increasing a maintainability or protecting ability of the applique armor.

Obliquely set relative to one surface means the interior wall of each hole substantially defining a right angle cylinder, whereby the wall is angled relative to at least one surface of the armor plate.

The defensive ceramic based armor is constructed and configured for covering a substrate and for inhibiting an intrusion of ammunition and ammunition based projectiles.

The defensive ceramic, in one embodiment, has a thin skin layer is positioned externally, internally, or internally and externally to the armor.

In one embodiment, the present invention is a device for providing anti-projectile armoring protection to a substrate, the device comprising:
a defensive applique or integral armor;
means for affixing said defensive applique or integral armor to the substrate;
said defensive applique or integral armor including a flat or curved armor plate composed of silicon carbide with carbon fibers forming a C/SiC plate and one or more layers, applied externally, internally, or internally and externally to said C/SiC plate;
said C/SiC plate increasing a protecting ability of said armor and having a predetermined thickness and a plurality of holes;
said holes being sufficiently small to prevent a projectile from passing through; said holes passing through the first surface into the plate a distance of 20-65% of the thickness; said holes being set obliquity to absorb kinetic energy by friction and impact; and
a thin layer increasing maintainability or protecting ability of said armor.

The device further comprises a backing layer, a disruptive layer, and an adhesive layer disposed between said backing layer and said a disruptive layer.

The device armor defines a stand-off distance between said applique and the substrate.

The present invention is also a process for producing the defensive, ceramic based, applique armor described before, the process comprising the following steps:
producing cores having a shape corresponding to that of the hollow channels; introducing the cores to produce a green body by combining the cores with a press molding compound into a press molding mold;
the press molding compound containing one or more of carbon fibers, carbon threads, pitch, resins or combinations thereof;
the press molding compound forming carbon-containing residues upon heat treatment in a non-oxidizing atmosphere configured to cause a position of the cores to correspond to a desired position of the hollow channels;
curing the green body by heating to a temperature of from 120° C to 280° C under pressure;
carbonizing the cured green body by heating in a non-oxidizing atmosphere to a temperature of from about 750° C to about 1100° C with the carbonizing forming a carbon-carbon, C/C, body; and
the cores, after the carbonizing step, being formed of a material melting without decomposition at a temperature above a curing temperature of shaping by pressing the press molding compound.

The process also includes, subsequent to the carbonizing step, infiltrating the C/C body with liquid metal in which retention of shape occurs, with at least partial reaction of the carbon present in the matrix of the C/C body with the metal to form carbides.

The process uses meltable materials for the cores being pyrolyzed in a process in which no substantial residue is present at a temperature above their melting point.

The process provides any residue remaining after the pyrolysis of the meltable material for the core is not more than 10% w/w. The the press molding compound of the process contains carbon fibers having a mean length of at least 5 mm, the fibers functioning as a reinforcing material. The press molding compound is introduced into the mold in such a way that carbon fibers are predominantly oriented parallel to the direction of the highest tensile stress in the resulting shaped part and the press molding compound contains carbon fibers in the form of coated short fiber bundles as reinforcing material. The press molding compounds include pitches selected from among coal tar pitch, petroleum pitch, curable resins, and combinations thereof, and the crucible resins being selected from phenolic resins, epoxy resins, polyimides, filler-containing mixtures with furfuryl alcohol, furan resins and combinations thereof.

In the process the core material has a linear coefficient of thermal expansion up to its decomposition temperature of not more than about 5 x 10⁻⁶ K⁻¹.

The process as claimed in claim 7, wherein the material for the core is a thermoplastic polymer having a heat distortion temperature according to ISO 75A of at least 80° C and a Brinell hardness of at least 30 MPa.

The material for the core is a filler-containing thermoplastic polymer in which the mass fraction of fillers is at least 15%.

The fillers are selected from materials including chalk, glass spheres, glass microspheres, wollastonite, glass fibers, carbon fibers, ceramic fibers and combinations thereof.

The material for the core is a filler-containing thermoplastic polymer having fillers including oxidants acting as pyrolysis accelerators. In one embodiment, the material used for the core is a formed thermoplastic.

In one embodiment, the material used for the core is a low-melting metal. When a low melting metal is used, the low-melting metal are metal or metal alloys have melting points below 300° C.

In one embodiment, the the low-melting alloys are based on the metals Al, Zn, Cu, Bi, Pb, Sn, Fe, Sb and Si.

Preferred low-melting alloys are selected from bismuth and bismuth alloys, tin alloys and Zn/Mg/Al/Cu alloys.

Other objectives and features of the present invention will be apparent from the following detailed description of the invention, drawings and the claims.

### Brief Description of the Drawings:

Fig. 1 is a plan view and a cross section along lines A-A showing one embodiment not falling within the scope of the invention in which arrangement of the holes results in a weight reduction of about 2.5%.
Fig. 2 is a plan view and a cross section along lines A-A showing one embodiment not falling within the scope of the invention in which arrangement of the holes results in a weight reduction of about 5%.
Fig. 3 is a plan view and a cross section along lines A-A showing one embodiment not falling within the scope of the invention in which arrangement of the holes results in a weight reduction of about 10%.
Fig. 4 is a plan view and a cross section along lines A-A showing one embodiment not falling within the scope of the invention in which arrangement of two connected plates is shown in the cross section view.
Fig. 5 is a plan view and a cross section along lines A-A showing one embodiment of the base not falling within the scope of the invention and cross section showing arrangement of the base, molding pegs and press mold material.
Fig. 6 is a plan view and a cross section along lines A-A showing one embodiment of the base not falling within the scope of the invention and cross section showing arrangement of the base, molding pegs press mold material and top plate.
Fig. 7 is a plan view and a cross section along lines A-A showing one embodiment of the invention in which arrangement of the holes shown in the cross section shows the holes passing only partially though the depth of the plate.

### Best Mode for Carrying Out the Invention:

The present invention is an applique armor in which a plate 10 having a first side 12 and a second side 16 is formed as a portion of the applique armor. Plate 10 has a plurality of holes or orifices 14 which are formed on at least one side of plate 10. The holes 14 are formed by at least one of press molding, drilling, boring, or combinations thereof. When holes 14 are formed by press molding, a base plate 18 is placed within a frame 20. Frame 20 is about the perimeter of base 18 and is formed with a depth such that when press mold material 24 is placed on top of base 18 within frame 20, a void space 26 is present which will accommodate top plate 28 for the press molding process. Molding pegs 24 extend outward from base 18 such that a press molded article according to the present invention has a plurality of oblique holes of orifices 14 formed in plate 10.

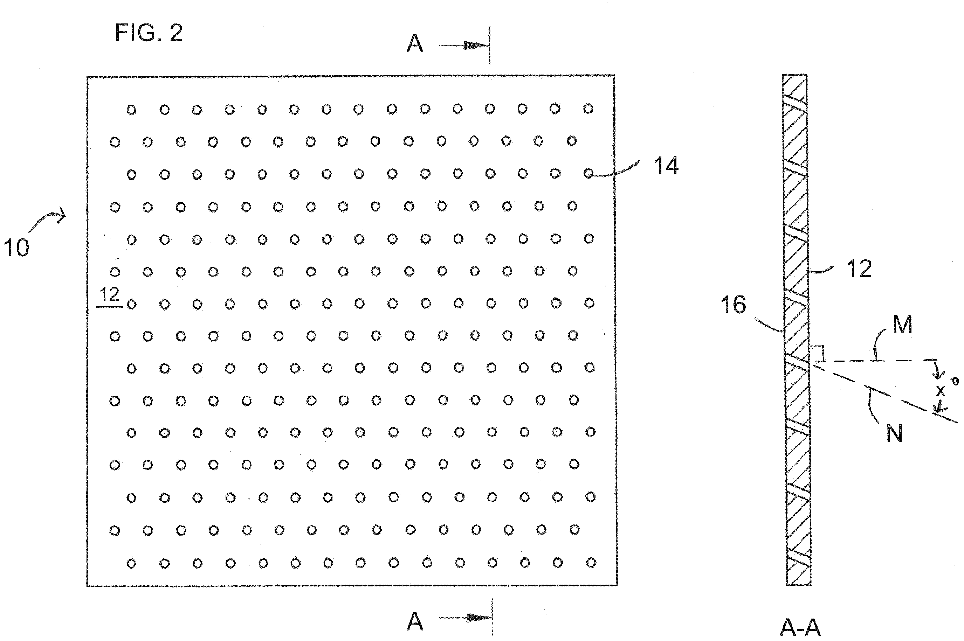

As shown in Fig. 1, the first surface 12 of plate 10 has holes 14 formed therein. Fig. 1 also depicts a partial cross section thereon along A-A that shows the holes extending completely thorough such that holes 14 have openings on first surface 12 and second surface 16. The partial cross section is provided to show that in one embodiment not falling within the scope of the present invention, holes 14 have openings on each of first surface 12 and second surface 16 but a true cross section, as shown in Figs. 2-6 would also depict each of first surface 12 and second surface 16 and the openings would not be clearly evident. The arrangement of holes 14 in Fig. 1 results in the removal of mass and an approximate reduction in weight by about 2.5%.

The arrangement in Fig. 2 provides an approximate reduction in weight of about 5%. Additionally, Fig. 2 shows the oblique offset of holes 14. Line "M" represents a perpendicular line to the horizontal surface of first surface 12. This is demonstrative only, for example, if first surface 12 were curve, line "M" would be perpendicular to a tangent line wherein the point of tangency is the center of hole 12. Line "N" represents a continuation of the interior wall forming a cylindrical cavity that is viewed as hole 14. Angle "x" is the angle of offset, or oblique, relative to line "M." In one embodiment, angle "x" is between about 15-50 degrees. In a preferred embodiment, angle "x" is about 20-30 degrees.

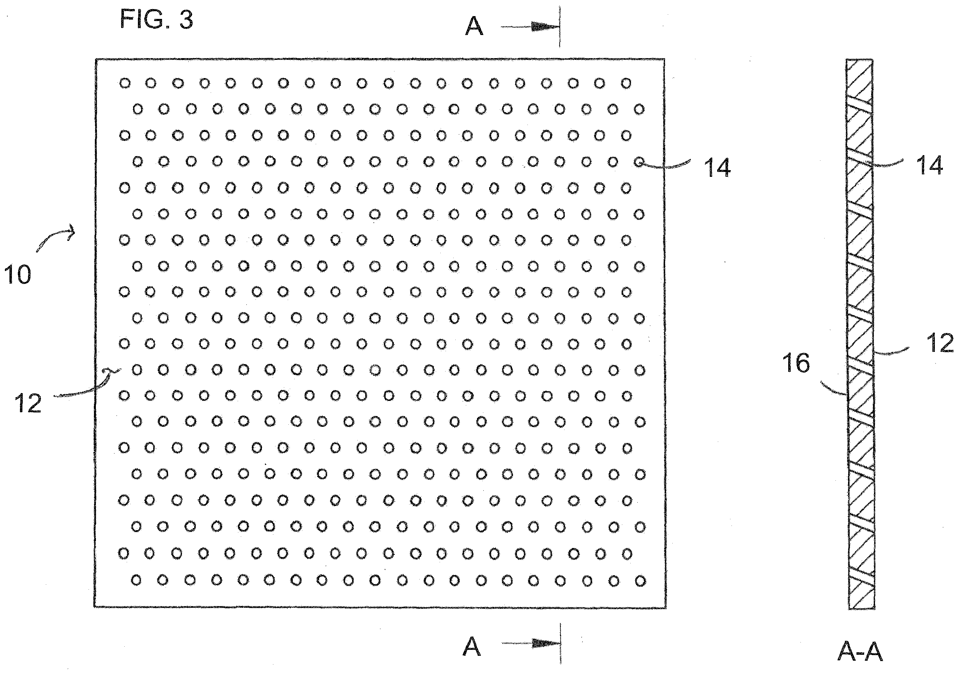

The arrangement of holes 14 in Fig. 3 results in the removal of mass and an approximate reduction in weight by about 2.5%.

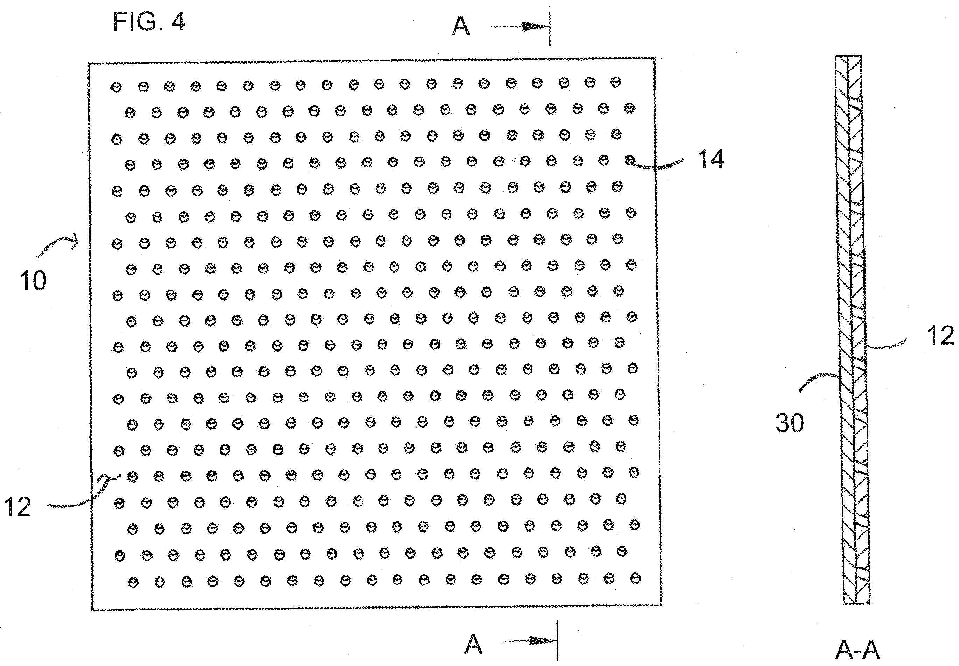

Fig. 4 is an embodiment not falling within the scope of the invention whereby a solid C/SiC plate 30 is attached directly to the second surface 16 of a plate in which holes 14 are formed thereon.

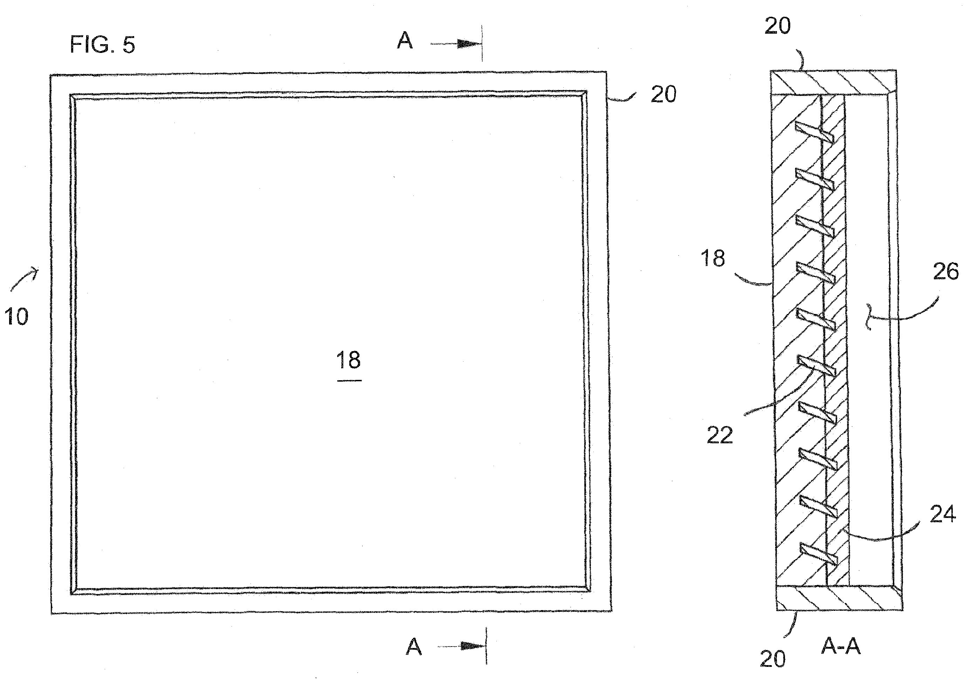

Fig. 5 shows a base plate 18 used in press molding. Base plate 18 has frame 20 about the perimeter. Frame 20, as seen in cross section view along line A-A of Fig. 5 contains base plate 18 and defines an interior cavity 26 above the surface of press mold material 24. Base plate 18 has press mold pegs 22 disposed thereon for creating a negative mold and forming the desired holes 14 of a plate subsequent to press molding.

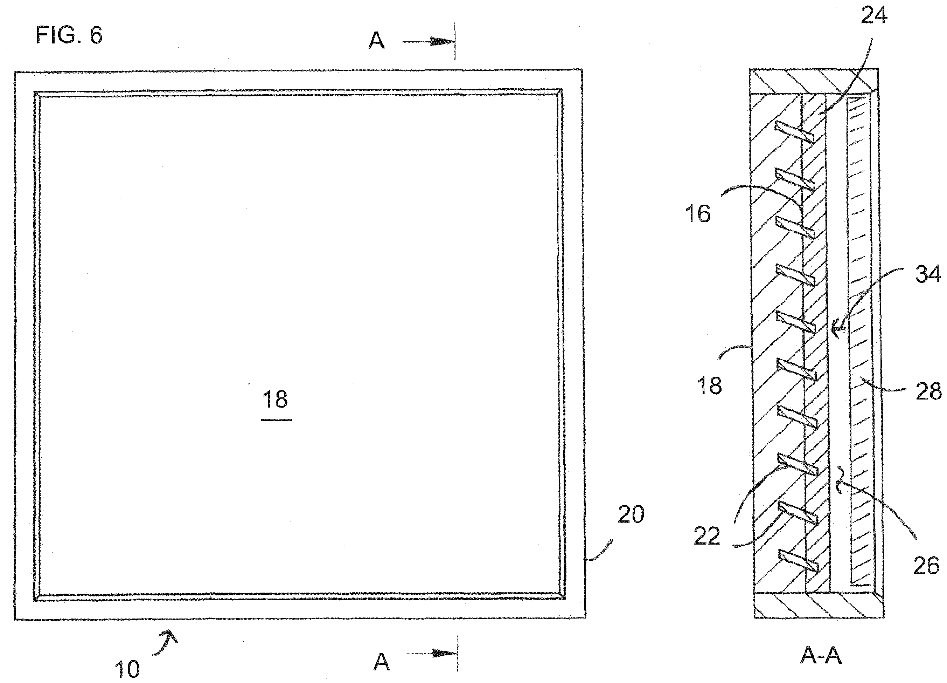

Fig. 6 shows the arrangement of Fig. 5 and further shows top press mold plate 28 placed within frame 20 and within cavity 26 above press mold material 24. Arrow 34 shows directional application of movement and force used in the press molding process.

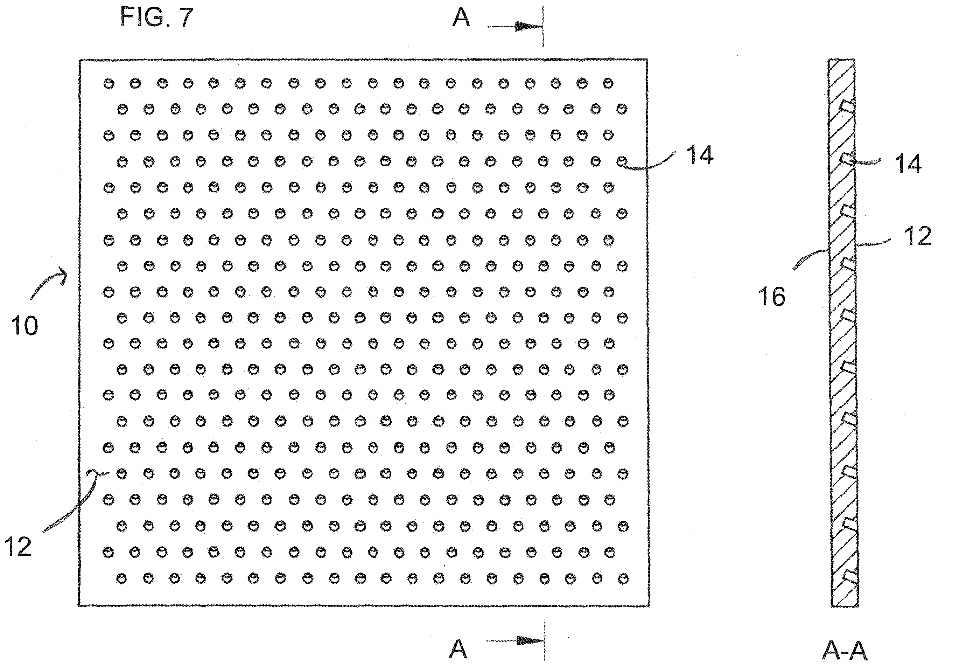

Fig. 7 is one embodiment whereby holes 14 only form through first surface 12 into the plate distance of approximately 20-65% percent of the thickness. In a preferred embodiment, the holes extend between about 35-60% the thickness of the plate.

Each of holes 14 have a diameter that varies depending on environment of intended use.

A preferred embodiment has holes 14 with an inner diameter between 5-7mm.

Infiltration of at least an outer layer of the shaped body with a silicon melt and at least partial reaction with the carbon in the shaped body to produce SiC, thus forming a shaped body which comprises, at least in the outer layer, a composite ceramic composed of carbon-containing fibers embedded in a matrix comprising predominantly SiC, Si and C (here referred to as C/SiC).

In the following, the term C/SiC also encompasses the material variant in which, as described above, only an outer layer of the carbon body is infiltrated with silicon and reacted therewith.

Customary production processes also include such where the C/C body is densified via the liquid or gas phase with carbon precursors, such as substances which form carbon upon heating in the absence of oxidizing media, or by means of carbon, or the matrix comprising predominantly SiC, Si and C is produced by gas-phase infiltration (CVD, chemical vapor deposition, or CVI, chemical vapor infiltration) or by pyrolysis of Si-containing pre-ceramic polymers.

The process and material of the present invention is used to form a composite armor including a disrupting layer and a backing layer which provides protection against blast and ballistic threats. Included in the present invention are encapsulated ceramic materials that may be used to provide protection from ballistic and overpressure threats. A disruptive layer is provided to "disrupt" a projectile striking the composite armor through one or more mechanisms, resulting in a dispersal of its kinetic energy.

Materials used for automotive brake disks are nowadays predominantly steel or gray cast iron, and in aircraft applications carbon materials reinforced with carbon fibers (C/C). The properties required of the disk materials are high mechanical stability, heat resistance, hardness and wear resistance in combination with the friction partner in the friction pairing of the brake. The use temperature of gray cast iron brake disks used hitherto is limited by the melting point of the material. The temperature at which mechanical failure occurs is, depending on the stress, significantly below the melting point. Furthermore, there is a risk of cracking of the disks due to transformation of the metallic microstructure upon heating. The use of fiber-reinforced ceramics as a material for brake disk applications has been found to be a solution to these problems. Materials based on silicon carbide reinforced with carbon fibers (C/SiC) in particular have been found to be useful for this application. The advantages of this material are the lower density (thus reduced weight for a given volume), the high hardness and heat resistance up to about 1400° C. and, not least, the extremely high wear resistance. The significantly reduced weight of brake disks made of these C/SiC materials is a positive factor in improving comfort and safety by reduction of the unsprung masses in motor vehicles and an economic factor in the aircraft field. The high hardness and wear resistance of C/SiC components makes it possible to achieve far longer operating lives compared to previously customary materials based on C/C or metal.

A process for producing C/SiC components is known from, for example, DEA197 10 105 and comprises, inter alia, the following steps:
preparing of a press molding compound of carbon-containing fibers or fiber bundles which may be coated with a coating and fillers and/or binders such as resins and/or pitch,
shaping of the mixture under pressure and at elevated temperature and carbonization of the carbon-containing fillers and binders to produce a shaped body, in particular a shaped body comprising carbon reinforced with carbon fibers (C/C) and, if appropriate, subsequent graphitization;
infiltrating of at least an outer layer of the shaped body with a silicon melt and at least partial reaction with the carbon in the shaped body to produce SiC, thus forming a shaped body which comprises, at least in the outer layer, a composite ceramic composed of carbon-containing fibers embedded in a matrix comprising predominantly SiC, Si and C (here referred to as C/SiC).

In the following, the term C/SiC also encompasses the material variant in which, as described above, only an outer layer of the carbon body is infiltrated with silicon and reacted therewith.

The invention provides a core material and a process matched thereto which is suitable for shaping of fiber-reinforced carbon-containing intermediate bodies by pressing so that they have a shape close to the final shape, with the core being able to be removed gently, simply and preferably without leaving a residue and without damaging the cured intermediate body.

According to the invention, this is achieved by using cores made of materials which, during the shaping by pressing, melt without decomposition above the curing temperature and are, if appropriate, pyrolyzed without leaving a residue in the further thermal process. The intermediate bodies which have been freed of the core can then, if appropriate, be passed to infiltration with molten metal, in particular siliconization, to give the finished composite ceramic.

The invention accordingly provides a process for producing hollow bodies comprising fiber-reinforced ceramic materials, where cores whose shape corresponds to that of the hollow spaces are produced in a first step;
a green body is produced in a second step by introducing the above-mentioned cores and a press molding compound into a mold, where the press molding compound comprises carbon fibers and/or carbon fiber bundles and/or carbon threads, which have preferably been coated with carbon or carbon-containing compounds, and pitch and/or resins which form carbon-containing residues on heat treatment in a non-oxidizing atmosphere, in such a way that the position of the cores corresponds to the desired position of the hollow spaces to be formed;
the green body is cured by heating to a temperature of from 120° C. to 280° under pressure in a third step; wherein atmoshpheric pressure is approximately 1.0 x 10⁵ kPa, pressure applied is between atmospheric pressure and 1.5 x 10⁶ MPa.
the cured green body, also referred to as intermediate body, is carbonized in a fourth step by heating in a non-oxidizing atmosphere to a temperature of from about 750° C. to about 1100° C. to give a C/C body; and, if desired,
the C/C body is infiltrated with liquid metal with retention of its shape in a fifth step, with at least partial reaction of the carbon present in the matrix of the C/C body with the metal to form carbides, wherein the cores comprise predominantly a material which in the fourth step melts without decomposition at a temperature above the curing temperature of the shaping by pressing of the press molding compound.

Silicon is also encompassed by the term "metals", for the purposes of this invention.

The linear coefficient of thermal expansion of the material used for the cores up to its decomposition temperature is preferably not more than 5 x 10⁻⁶ K⁻¹.

In this context, "predominantly" means at least 50% of the mass.

Preference is given to using materials whose melting point is not more than 100° C, particularly preferably not more than 50° C. and in particular not more than 30° C, above the curing temperature of the green body.

In a further preferred embodiment, the materials capable of melting without decomposition which are used for the cores are pyrolysed without leaving a substantial residue (i.e. not more than 20%, preferably not more than 10% of the original mass) at a temperature above their melting point, preferably at least 10° C, in particular at least 50° C, above their melting point.

In an embodiment using thermoplastic polymers as core materials, the cores are preferably produced by injection molding. In general, suitable shaping processes are the known methods such as cold or hot pressing, casting, pressure casting or cutting machining, depending on the material used.

The process of the present invention provides for press molding compounds comprising carbon fibers, thermally curable binders and, in particular, carbon-containing additives to be pressed in the second step to form green bodies having hollow spaces and/or recesses.

The carbon fiber layers of the C/C intermediate body are preferably built up in the vicinity of the core in a predetermined preferential direction of the carbon reinforcing fibers on the core. For this purpose, preference is given to using press molding compounds which comprise carbon fibers having a mean length of at least 5 mm. The press molding compound of the second step is then preferably introduced into the mold in such a way that the carbon fibers are predominantly oriented parallel to the direction of the highest tensile stress in the resulting shaped part. In this context, predominantly means at least 50%. It is also possible to wind tapes made of parallel and bound carbon fibers (also known as "UDTs"=unidirectional tapes) around the cores, and to fix this sheath by means of thermally curable binders if necessary. Further press molding compounds containing short fibers or fiber bundles are then usually applied on top of this layer of carbon fibers or threads oriented in the preferred direction.

In another preferred embodiment, carbon fibers are used in the form of coated short fiber bundles. Particular preference is here given to fibers or fiber bundles which are coated with graphitized carbon and have mean lengths of less than 5 mm.

As thermally curable binders, use is made of pitches such as coal tar pitch or petroleum pitch and/or preferably curable resins such as phenolic resins, epoxy resins, polyimides, filler-containing mixtures with furfuryl alcohol or furan resins. These compositions are, for this purpose, introduced into a pressing mold which is provided with "lost cores". The cores occupy the space of the hollow spaces or recesses to be formed later in the composite ceramic. After the pressing mold has been filled, the composition is pressed and cured under the action of heat.

In one embodiment of the invention, the cores are produced from meltable materials which are selected from the group consisting of thermoplastic polymers (synthetic polymers) which can be pyrolyzed without leaving a residue, hereinafter also referred to as thermoplastic cores. According to the invention, the thermoplastic material for the core is selected so that its melting point is above the curing temperature in the shaping process for the green body, typically in the range from 120 to 300° C, but significantly below the carbonization temperature of the pressed and cured green bodies. The melting point is usually at least 150° C, preferably at least 180° C. and particularly preferably in the range from 220° C. to 280° C. If phenolic resins are used as binders for the press molding compounds, the melting point of the thermoplastic is, for example, preferably above 150° C. For the preferred shaping by pressing and hot curing of the binders, the thermoplastic core has to meet strict requirements in terms of its heat distortion resistance. The heat distortion temperature (as defined in ISO 75 A) is usually above 80° C, preferably at least 150° C. The hardness (Brinell hardness) should be at least 30 MPa.

Particularly useful thermoplastics are polyamides (PAs) such as PA 66, polyimides (Pis) such as polyethermide (®Ultem, General Electric) or modified polymethacrylamide (PMI, e.g. ®Kamax, Rohm & Haas), poly-oxymethylene (POM) and polyterephthalates (PETP), and also their copolymers. After shaping by pressing, the green body together with the thermoplastic core is converted into the C/C state, i.e. carbonized. This is generally achieved by heating in a non-oxidizing atmosphere, e.g. under protective gas (nitrogen) or under reduced pressure to temperatures in the range from about 750° C. to 1100° C. If the bodies are heated to temperatures above about 1800° C, graphitization of the carbon additionally takes place. It is important that the thermoplastic core melts and at least some of the melt flows out of the hollow spaces of the green body without decomposing to form gaseous products. The coefficient of thermal expansion of the core is preferably not more than 5 x 10⁻⁶ K⁻¹ to make sure that the green body is not subjected to stresses during heating to the melting point of the thermoplastic core.

The thermoplastic polymer can be collected after melting and be reused if appropriate. However, it is particularly preferred that the thermoplastic is pyrolyzed during the carbonization step, especially because the porous green body can retain residues of the melt in the pores. The pyrolysis then takes place at higher temperatures, essentially only outside the green body. This avoids rupture of the green body. The pyrolysis, i.e. the decomposition to form gaseous products, usually occurs at above 250° C, preferably at least 10° C. above the melting point of the thermoplastic material. It is advantageous to use thermoplastics which can be pyrolyzed virtually completely, although small amounts of residual carbon do not interfere since they are incorporated into the ceramic matrix to be formed later. The residue remaining on pyrolysis of suitable polymers at 900° C. is not more than 10%, particularly preferably not more than 8% and very particularly preferably not more than 1%. Polymers which are well suited for this purpose are those based on PA, PMI, POM and PETP. Preference is given to polyamide 66, polyoxymethylene, polyethylene terephthalate and poly-methacrylimide, and also their derivatives, copolymers and blends. As components of polymer blends, it is also possible, in particular, to use polymers which are thermally less stable.

In a further embodiment of the invention, use is made of thermoplastic cores which are manufactured from filler-containing thermoplastic materials to improve their strength and shape stability. The fillers may be in the form of powders, fibers, microspheres or whiskers and are selected from the group consisting of glass, mineral fillers such as chalk, wollastonite, ceramic materials and metals. Preference is given to using fillers which neither decompose nor melt up to the carbonization temperature. The fillers can be recaptured as pyrolysis residue after carbonization and can then be removed and possibly reused. Preference is given to using fibrous fillers such as glass, mineral or carbon fibers. The mass fraction of fillers in the filled thermoplastic is, depending on the method of manufacturing the cores, at least 15%, preferably at least 30%. It is also possible to use organic, non-pyrolyzable materials as fillers; carbonizable resins such as the binders mentioned above are particularly useful.

It is likewise contemplated, in one embodiment, to use filler-containing thermoplastic materials where the fillers comprise oxidation agents (oxidants) which act as pyrolysis accelerators. To simplify the removal of any residues of the thermoplastic core from the green body, this incorporation of oxidants has been found to be very useful. These oxidants contribute to the targeted oxidative decomposition of the thermoplastic core. Particular preference is given to incorporation of ammonium nitrate, for example in a mass fraction of at least 10%.

The amount of pyrolysis gases liberated during the decomposition of the core can be reduced and the carbonization step for the green bodies can be technologically simplified at the same time when, in a further advantageous embodiment of the invention, foamed thermoplastics are used as core material. In this case, it is possible to use, for example, foamed polyamide such as polymethacrylamide.

In a further embodiment of the invention, cores of low-melting metals are used. Process and requirements which the materials have to satisfy are virtually identical to those in the case of thermoplastic cores up to the melting step. The advantage of metals over thermoplastics is their significantly higher strength, but there is not a possibility of pyrolysis as in the case of the thermoplastic cores. It is therefore advantageous to collect and reuse the molten metals. Particularly useful metals are low-melting metal alloys having melting points below 300° C.

Alloys based on the metals Al, Zn, Cu, Bi, Pb, Sn, Fe, Sb and Si are usually used. In the case of metal alloys, bismuth and bismuth alloys have been found to be very useful since they melt at a low temperature and have a negative coefficient of thermal expansion. This avoids rupture of the green body on heating. After they have melted and flown out, the molten metals can be returned to the production process. Apart from this economic and ecological advantage, the greatest advantage of the use of a metallic core is the fact that it can be produced very easily in a casting mold. Particular preference is given to Bi and Sn alloys, and also Zn/Mg/Al/Cu alloys.

After carbonization of the green body, any pyrolysis residues or carbon residues present in the hollow spaces formed are removed and a porous C/C body having hollow spaces or recesses is obtained and can be utilized further. It can be subjected to further machining/shaping or assembled or adhesively bonded to produce more complex structures.

In a fifth step, the porous C/C body is, if desired, densified to obtain a more usable workpiece.

In a preferred embodiment of the process of the invention, this densification is effected by converting the carbon of the C/C body at least partly into the corresponding carbides by infiltration with molten metals and, if appropriate, subsequent heat treatment. Preference is given to infiltration with molten silicon, in which case at least part of the carbon (preferably the carbon in the matrix) reacts to form silicon carbide; the matrix then comprises SiC, unreacted carbon and unreacted silicon. For this purpose, the C/C body is covered with silicon powder and then heated under reduced pressure to temperatures of from about 1500 to about 1800° C. Depending on the intended use, it is not absolutely necessary to convert all of the C/C body to C/SiC, but it is usual for at least the outer layer to be converted to C/SiC. Although silicon melt infiltration is the preferred process, the C/C body can also be densified by means of other customary processes to form the matrices customary in composite materials technology. In particular, the liquid silicon infiltration process can also be carried out using silicon alloys which may further comprise, inter alia, metals such as Cr, Fe, Co, Ni, Ti and/or Mo.

The process described is preferably used for producing brake disks or clutch disks. Here, the press molding compound and the cores are introduced into a cylindrical mold, with continuous layers of the press molding compound preferably being introduced as lowermost and uppermost layers. The thickness of the bottom layer and the covering layer after pressing is preferably at least 7 mm. These layers form the friction layer of the brake or clutch disk. The shaped body which forms the brake or clutch disk usually has the outer shape of an annulus, i.e. the region near the axis is open over the entire thickness of the disk. The cores are preferably arranged in a rotation-symmetric manner about the axis of the cylinder, and preference is given to using at least 2 and not more than 16 cores. The shape of the cores is preferably such that the hollow spaces formed extend from the periphery of the cylindrical shaped body to the internal edge of the shaped body and thus form an open passage between the internal and external cylindrical edges of the annulus.

Fig. 1 is a ceramic based "P-900 Style Armor with for example the following features: a substrate (e.g. iron, aluminum, alloys or silicon carbide with carbon fibers C/SiC); a skin layer 1 (e.g. an adhesive layer); a skin layer 2 (e.g. a hard layer such as C/SiC) and a cylindrical hole structure (e.g. C/SiC).

The specific dimensions and parameters set forth above are merely representative figures. The dimensions of the a preferred armor of the present invention are only limited by the size of the production facilities available. It is to be understood that the embodiments described and shown are given by way of example only, and that the armor element according to the invention can be the object of numerous other variants --i.e. size, shape, etc.

## Claims

1. A defensive, ceramic based, applique armor for covering and protecting a substrate which may be exposed to attack by projectiles, the applique armor comprising:
a flat or curved armor plate (10) formed of ceramic material and having a first surface (12) and a second surface (16); said ceramic material being formed of silicon carbide with carbon fibers (C/SiC);
said ceramic material having a plurality of holes (14) on at least one of said surfaces;
said holes having a diameter smaller than an anticipated bullet or ammunition projectile; said holes passing through the first surface into the plate a distance of 20-65 % of the thickness;
said holes being set obliquely relative to said at least one surface;
said holes formed by press molding, boring, drilling, or combinations thereof.

2. The defensive, ceramic based, applique armor of claim 1, further comprising a thin skin layer or multiple layers increasing a maintainability or protecting ability of the applique armor.

3. The defensive, ceramic based, applique armor of claim 1, wherein the ceramic based armor is constructed and configured for covering a substrate and for inhibiting an intrusion of ammunition and ammunition based projectiles.

4. The defensive, ceramic based, applique armor of claim 2, wherein said thin skin layer is positioned externally, internally, or internally and externally to the armor.

5. A device for providing anti-projectile armoring protection to a substrate, the device comprising:
a defensive applique or integral armor;
means for affixing said defensive applique or integral armor to the substrate;
said defensive applique or integral armor including a flat or curved armor plate (10) composed of silicon carbide with carbon fibers forming a C/SiC plate and one or more layers, applied externally, internally, or internally and externally to said C/SiC plate;
said C/SiC plate increasing a protecting ability of said armor and having a predetermined thickness and a plurality of holes (14); said holes being sufficiently small to prevent a projectile from passing through;
said holes passing through a first surface into the plate a distance of 20-65 % of the thickness,
said holes being set obliquity to absorb kinetic energy by friction and impact.

6. The device of claim 5 which further comprises a thin layer increasing maintainability or protecting ability of said armor.

7. The device of claim 5, which further comprises a backing layer, a disruptive layer, and an adhesive layer disposed between said backing layer and said a disruptive layer.

8. The device of claim 5, wherein said armor defines a stand-off distance between said applique and the substrate.

9. A process for producing the defensive, ceramic based, applique armor according to claim 1, the process comprising the following steps:
producing cores having a shape corresponding to that of the hollow channels;
introducing the cores to produce a green body by combining the cores with a press molding compound into a press molding mold;
the press molding compound containing one or more of carbon fibers, carbon threads, pitch, resins or combinations thereof;
the press molding compound forming carbon-containing residues upon heat treatment in a non-oxidizing atmosphere configured to cause a position of the cores to correspond to a desired position of the hollow channels;
curing the green body by heating to a temperature of from 120 ° C to 280 °C under pressure;
carbonizing the cured green body by heating in a non-oxidizing atmosphere to a temperature of from about 750 °C to about 1100 °C with the carbonizing forming a carbon-carbon, C/C, body; and the cores, after the carbonizing step, being formed of a material melting without decomposition at a temperature above a curing temperature of shaping by pressing the press molding compound.

10. The process as claimed in claim 9, which further comprises, subsequent to the carbonizing step, infiltrating the C/C body with liquid metal in which retention of shape occurs, with at least partial reaction of the carbon present in the matrix of the C/C body with the metal to form carbides.

11. The process as claimed in claim 9, which further comprises using meltable materials for the cores being pyrolyzed in a process in which no substantial residue is present at a temperature above their melting point.

12. The process as claimed in claim 11, wherein any residue remaining after the pyrolysis of the meltable material for the core is not more than 10% w/w.

13. The process as claimed in claim 9, wherein the press molding compound contains carbon fibers having a mean length of at least 5 mm, the fibers functioning as a reinforcing material.

14. The process as claimed in claim 9, wherein the press molding compound is introduced into the mold in such a way that carbon fibers are predominantly oriented parallel to the direction of the highest tensile stress in the resulting shaped part.

15. The process as claimed in claim 9, wherein the press molding compound contains carbon fibers in the form of coated short fiber bundles as reinforcing material.

16. The process as claimed in claim 9, wherein the press molding compounds include pitches selected from among coal tar pitch, petroleum pitch, curable resins, and combinations thereof, and the crucible resins being selected from phenolic resins, epoxy resins, polyimides, filler-containing mixtures with furfuryl alcohol, furan resins and combinations thereof.

17. The process as claimed in claim 9, wherein the core material has a linear coefficient of thermal expansion up to its decomposition temperature of not more than 5 × 10⁻⁶ K⁻¹.

18. The process as claimed in claim 9, wherein the material for the core is a thermoplastic polymer having a heat distortion temperature according to ISO 75A of at least 80° C and a Brinell hardness of at least 30 MPa.

19. The process as claimed in claim 9, wherein the material for the core is a filler-containing thermoplastic polymer in which the mass fraction of fillers is at least 15%.

20. The process as claimed in claim 9, which further comprises selecting fillers from chalk, glass spheres, glass microspheres, wollastonite, glass fibers, carbon fibers, ceramic fibers and combinations thereof.

21. The process as claimed in claim 9, wherein the material for the core is a filler-containing thermoplastic polymer having fillers including oxidants acting as pyrolysis accelerators.

22. The process as claimed in claim 9, wherein the material used for the core is a formed thermoplastic.

23. The process as claimed in claim 9, wherein the material used for the core is a low-melting metal.

24. The process as claimed in claim 23, wherein the low-melting metal alloys have melting points below 300 °C.

25. The process as claimed in claim 23, wherein the low-melting alloys are based on the metals Al, Zn, Cu, Bi, Pb, Sn, Fe, Sb and Si,

26. The process as claimed in claim 23, wherein the low-melting alloys are selected from bismuth and bismuth alloys, tin alloys and Zn/Mg/Al/Cu alloys.

## Patentansprüche

1. Abwehrende Keramik-basierte Auflageschutz-Panzerung zum Abdecken und Schützen eines Trägermaterials, das einem Angriff durch Projektile ausgesetzt sein kann, wobei die Auflageschutz-Panzerung umfasst:
eine flache oder gekrümmte Panzerplatte (10) aus keramischem Material mit einer ersten Oberfläche (12) und einer zweiten Oberfläche (16);
wobei das keramische Material aus Siliciumcarbid mit Carbonfasern (C/SiC) gebildet ist;
wobei das keramische Material eine Vielzahl von Löchern (14) auf mindestens einer der Oberflächen aufweist;
wobei die Löcher einen Durchmesser aufweisen, der kleiner ist als ein erwartetes Geschoss oder Munitionsprojektil;
wobei die Löcher durch die erste Oberfläche in einer Strecke von 20 bis 65% der Dicke in die Platte gehen;
wobei die Löcher relativ zu der mindestens einen Oberfläche schräg gestellt sind;
wobei die Löcher durch Pressformen, Aufbohren, Bohren oder Kombinationen davon gebildet werden.

2. Abwehrende Keramik-basierte Auflageschutz-Panzerung nach Anspruch 1, weiterhin umfassend eine dünne Decklage oder mehrfache Lagen, die eine Haltbarkeit oder Schutzfähigkeit der Auflageschutz-Panzerung erhöhen.

3. Abwehrende Keramik-basierte Auflageschutz-Panzerung nach Anspruch 1, wobei die Keramik-basierte Panzerung konstruiert und konfiguriert ist, um ein Trägermaterial abzudecken und ein Eindringen von Munition und auf Munition basierenden Projektilen zu verhindern.

4. Abwehrende Keramik-basierte Auflageschutz-Panzerung nach Anspruch 2, wobei die dünne Decklage außen, innen oder innen und außen an der Panzerung positioniert ist.

5. Vorrichtung zum Bereitstellen eines Anti-Projektil-Bewehrungsschutzes für ein Trägermaterial, wobei die Vorrichtung umfasst:
eine abwehrende Auflage- oder integrale Panzerung;
Mittel zum Befestigen der abwehrenden Auflage- oder der integralen Panzerung an dem Trägermaterial;
wobei die abwehrende Auflage- oder integrale Panzerung, die eine flache oder
gekrümmte Panzerplatte (10) einschließt, zusammengesetzt ist aus Siliciumcarbid mit Carbonfasern, die eine C/SiC-Platte bilden, sowie einer oder mehreren Lagen, die außen, innen oder innen und außen an der C/SiC-Platte angebracht sind;
wobei die C/SiC-Platte die Schutzfähigkeit der Panzerung erhöht und eine vorbestimmte Dicke und eine Vielzahl von Löchern (14) aufweist;
wobei die Löcher ausreichend klein sind, um zu verhindern, dass ein Projektil hindurchgeht;
wobei die Löcher durch eine erste Oberfläche in einer Strecke von 20 bis 65% der Dicke in die Platte gehen;
wobei die Löcher schräg gestellt sind, so dass sie kinetische Energie durch Reibung und Aufprall absorbieren.

6. Vorrichtung nach Anspruch 5, die ferner eine dünne Lage aufweist, welche die Haltbarkeit oder Schutzfähigkeit der Panzerung erhöht.

7. Vorrichtung nach Anspruch 5, die ferner eine verstärkende Lage, eine disruptive Lage und eine Klebstoff-Lage umfasst, die zwischen der verstärkenden Lage und der disruptiven Lage angeordnet ist.

8. Vorrichtung nach Anspruch 5, wobei die Panzerung eine Standoff-Distanz zwischen der Auflage und dem Trägermaterial festlegt.

9. Verfahren zum Herstellen der abwehrenden, Keramik-basierten Auflageschutz-Panzerung nach Anspruch 1, wobei der Vorgang die folgenden Schritte umfasst:
Herstellen von Kernen, die eine Form aufweisen, die mit derjenigen der Hohlkanäle korrespondiert;
Einführen der Kerne, um einen Grünkörper herzustellen, indem die Kerne mit einer Pressformmasse in eine Pressform vereint werden;
wobei die Pressformmasse eine oder mehrere von Carbonfasern, Carbonfäden, Pech, Harzen oder Kombinationen davon enthält;
wobei die Pressformmasse beim Wärmebehandeln in einer nichtoxidierenden Atmosphäre Kohlenstoff enthaltende Rückstände bildet, die so konfiguriert sind, dass sie eine Position der Kerne bewirken, die mit einer gewünschten Position der Hohlkanäle korrespondiert;
Härten des Grünkörpers durch Erhitzen auf eine Temperatur von etwa 120 °C bis etwa 280 °C unter Druck;
Carbonisieren des ausgehärteten Grünkörpers durch Erhitzen auf eine Temperatur von etwa 750 °C bis etwa 1100 °C in einer nichtoxidierenden Atmosphäre, wobei das Carbonisieren einen Kohlenstoff-Kohlenstoff-, C/C-Körper bildet, und die Kerne nach dem Schritt des Carbonisierens aus einem Material gebildet werden, das ohne Zersetzung bei einer Temperatur oberhalb einer Härtungstemperatur der Formgebung durch Pressen der Pressformmasse schmilzt.

10. Verfahren nach Anspruch 9, der nach dem Schritt des Carbonisierens weiterhin das Infiltrieren des C/C-Körpers mit flüssigem Metall umfasst, in welchem die Bewahrung der Form mit mindestens einer Teilreaktion des in der Matrix des C/C-Körpers vorhandenen Kohlenstoffes mit dem Metall erfolgt, um Carbide zu bilden.

11. Verfahren nach Anspruch 9, ferner umfassend die Verwendung von schmelzbaren Materialien für die Kerne, die in einem Verfahren pyrolysiert werden, bei dem bei einer Temperatur oberhalb ihres Schmelzpunktes kein wesentlicher Rückstand vorliegt.

12. Verfahren nach Anspruch 11, wobei jeglicher Rückstand, der nach der Pyrolyse des schmelzbaren Materials für den Kern zurückbleibt, nicht mehr als 10 Gew.-% beträgt.

13. Verfahren nach Anspruch 9, wobei die Pressformmasse Carbonfasern mit einer mittleren Länge von mindestens 5 mm enthält, wobei die Fasern als verstärkendes Material wirken.

14. Verfahren nach Anspruch 9, wobei die Pressformmasse derart in die Form eingebracht wird, dass Carbonfasern überwiegend parallel zur Richtung der höchsten Zugspannung im resultierenden Formteil orientiert sind.

15. Verfahren nach Anspruch 9, wobei die Pressformmasse Carbonfasern in der Form von beschichteten Kurzfaserbündeln als verstärkendes Material enthält.

16. Verfahren nach Anspruch 9, wobei die Pressformmassen Peche einschliessen, die ausgewählt sind aus Steinkohlenteerpech, Erdölpech, härtbaren Harzen und Kombinationen davon, und die Tiegelharze ausgewählt sind aus Phenolharzen, Epoxyharzen, Polyimiden, Füllstoff enthaltenden Mischungen mit Furfurylalkohol, Furanharzen und Kombinationen davon.

17. Verfahren nach Anspruch 9, wobei das Kernmaterial einen Koeffizienten der linearen Wärmeausdehnung bis zu seiner Zersetzungstemperatur von nicht mehr als 5 × 10⁻⁶ K⁻¹ aufweist.

18. Verfahren nach Anspruch 9, wobei das Material für den Kern ein thermoplastisches Polymer ist, das eine Wärmeformbeständigkiet nach ISO 75A von mindestens 80 °C und eine Brinell-Härte von mindestens 30 MPa aufweist.

19. Verfahren nach Anspruch 9, wobei das Material für den Kern ein füllstoffhaltiges thermoplastisches Polymer ist, in dem der Masseanteil der Füllstoffe mindestens 15% beträgt.

20. Verfahren nach Anspruch 9, ferner umfassend Auswählen von Füllstoffen aus Kreide, Glaskugeln, Glasmikrokügelchen, Wollastonit, Glasfasern, Carbonfasern, Keramikfasern und Kombinationen davon.

21. Verfahren nach Anspruch 9, wobei das Material für den Kern ein Füllstoff enthaltendes thermoplastisches Polymer ist, das Füllstoffe einschließlich Oxidationsmittel aufweist, die als Pyrolysebeschleuniger wirken.

22. Verfahren nach Anspruch 9, wobei das für den Kern verwendete Material ein geformter Thermoplast ist.

23. Verfahren nach Anspruch 9, wobei das für den Kern verwendete Material ein niedrigschmelzendes Metall ist.

24. Verfahren nach Anspruch 23, wobei die niedrig schmelzenden Metalllegierungen Schmelzpunkte unterhalb von 300 °C aufweisen.

25. Verfahren nach Anspruch 23, wobei die niedrigschmelzenden Legierungen auf den Metallen Al, Zn, Cu, Bi, Pb, Sn, Fe, Sb und Si basieren.

26. Verfahren nach Anspruch 23, wobei die niedrig schmelzenden Legierungen ausgewählt sind aus Bismut und Bismutlegierungen, Zinnlegierungen und Zn/Mg/Al/Cu-Legierungen.

## Revendications

1. Blindage rapporté défensif à base de céramique pour couvrir et protéger un substrat qui peut être exposé à une attaque par des projectiles, le blindage rapporté comprenant :
une plaque de blindage plate ou incurvée (10) composée de matériau céramique et ayant une première surface (12) et une seconde surface (16) ;
ledit matériau céramique étant composé de carbure de silicium avec des fibres de carbone (C/SiC) ;
ledit matériau céramique ayant une pluralité de trous (14) sur au moins l'une desdites surfaces ;
lesdits trous ayant un diamètre plus petit qu'une balle ou un projectile de munition prévu ;
lesdits trous passant à travers la première surface dans la plaque sur une distance de 20 à 65 % de l'épaisseur ;
lesdits trous étant installés à l'oblique par rapport à ladite au moins une surface ;
lesdits trous étant formés par moulé-pressé, alésage, perçage ou des combinaisons de ceux-ci.

2. Blindage rapporté défensif à base de céramique selon la revendication 1, comprenant en outre une couche de revêtement mince ou de multiples couches augmentant une facilité d'entretien ou une capacité de protection du blindage rapporté.

3. Blindage rapporté défensif à base de céramique selon la revendication 1, dans lequel le blindage à base de céramique est construit et configuré pour couvrir un substrat et pour empêcher une intrusion de munitions et de projectiles à base de munitions.

4. Blindage rapporté défensif à base de céramique selon la revendication 2, dans lequel ladite couche de revêtement mince est positionnée à l'extérieur, à l'intérieur ou à l'intérieur et à l'extérieur du blindage.

5. Dispositif de fourniture de protection de blindage anti-projectile à un substrat, le dispositif comprenant :
un blindage rapporté ou d'un seul tenant défensif ;
un moyen de fixation dudit blindage rapporté ou d'un seul tenant défensif au substrat ;
ledit blindage rapporté ou d'un seul tenant défensif comportant une plaque de blindage plate ou incurvée (10) composée de carbure de silicium avec des fibres de carbone formant une plaque C/SiC et une ou plusieurs couches, appliquées à l'extérieur, à l'intérieur ou à l'intérieur et à l'extérieur de ladite plaque C/SiC ;
ladite plaque C/SiC augmentant une capacité de protection dudit blindage et ayant une épaisseur prédéterminée et une pluralité de trous (14) ;
lesdits trous étant suffisamment petits pour empêcher un projectile de passer au travers ;
lesdits trous passant à travers une première surface dans la plaque sur une distance de 20 à 65 % de l'épaisseur ;
lesdits trous étant installés à l'oblique pour absorber l'énergie cinétique par frottement et impact.

6. Dispositif selon la revendication 5, qui comprend en outre une couche mince augmentant une facilité d'entretien ou une capacité de protection dudit blindage.

7. Dispositif selon la revendication 5, qui comprend en outre une couche support, une couche de rupture et une couche adhésive disposée entre ladite couche support et ladite couche de rupture.

8. Dispositif selon la revendication 5, dans lequel ledit blindage définit une distance de sécurité entre ledit élément rapporté et le substrat.

9. Procédé de production du blindage rapporté défensif à base de céramique selon la revendication 1, le procédé comprenant les étapes suivantes :
la production de noyaux ayant une forme correspondant à celle des canaux creux ;
l'introduction des noyaux pour produire une ébauche crue en combinant les noyaux avec un composé de moulé-pressé dans un moule de moulé-pressé ;
le composé de moulé-pressé contenant une ou plusieurs parmi des fibres de carbone, des fils de carbone, de la poix, des résines ou des combinaisons de ceux-ci ;
le composé de moulé-pressé formant des résidus contenant du carbone lors d'un traitement thermique dans une atmosphère non oxydante configurée pour faire correspondre une position des noyaux à une position souhaitée des canaux creux ;
le durcissement de l'ébauche crue par chauffage jusqu'à une température de 120 °C à 280 °C sous pression ;
la carbonisation de l'ébauche crue durcie par chauffage dans une atmosphère non oxydante jusqu'à une température d'environ 750 °C à environ 1 100 °C, la carbonisation formant un corps carbone-carbone, C/C ; et les noyaux, après l'étape de carbonisation, étant composés d'un matériau fondant sans décomposition à une température au-dessus d'une température de durcissement de conformage par pressage du composé de moulé-pressé.

10. Procédé selon la revendication 9, qui comprend en outre, suite à l'étape de carbonisation, l'infiltration du corps C/C avec du métal liquide dans lequel une rétention de forme se produit, avec au moins une réaction partielle du carbone présent dans la matrice du corps C/C avec le métal pour former des carbures.

11. Procédé selon la revendication 9, qui comprend en outre l'utilisation de matériaux fusibles pour les noyaux qui sont pyrolysés dans un processus où aucun résidu substantiel n'est présent à une température au-dessus de leur point de fusion.

12. Procédé selon la revendication 11, dans lequel tout résidu restant après la pyrolyse du matériau fusible pour le noyau n'est pas supérieur à 10 % p/p.

13. Procédé selon la revendication 9, dans lequel le composé de moulé-pressé contient des fibres de carbone ayant une longueur moyenne d'au moins 5 mm, les fibres fonctionnant en tant que matériau de renforcement.

14. Procédé selon la revendication 9, dans lequel le composé de moulé-pressé est introduit dans le moule de manière à ce que les fibres de carbone soient majoritairement orientées parallèles à la direction de la contrainte de traction la plus élevée dans la partie façonnée résultante.

15. Procédé selon la revendication 9, dans lequel le composé de moulé-pressé contient des fibres de carbone sous forme de faisceaux de fibres courtes revêtus en tant que matériau de renforcement.

16. Procédé selon la revendication 9, dans lequel les composés de moulé-pressé comportent des poix choisis parmi la poix de houille, la poix de pétrole, des résines durcissables et des combinaisons de celles-ci, et les résines fondues au creuset étant choisies parmi des résines phénoliques, des résines époxy, les polyimides, des mélanges contenant des charges avec de l'alcool furfurylique, des résines furaniques et des combinaisons de ceux-ci.

17. Procédé selon la revendication 9, dans lequel le matériau de noyau a un coefficient linéaire de dilatation thermique jusqu'à sa température de décomposition non supérieure à 5 x 10⁻⁶ K⁻¹.

18. Procédé selon la revendication 9, dans lequel le matériau pour le noyau est un polymère thermoplastique ayant une température de déformation thermique selon la norme ISO 75A d'au moins 80 °C et une dureté de Brinell d'au moins 30 MPa.

19. Procédé selon la revendication 9, dans lequel le matériau pour le noyau est un polymère thermoplastique contenant des charges dans lequel la fraction en masse de charges est d'au moins 15 %.

20. Procédé selon la revendication 9, qui comprend en outre la sélection de charges parmi la craie, des sphères de verre, des microsphères de verre, la wollastonite, des fibres de verre, des fibres de carbone, des fibres de céramique et des combinaisons de celles-ci.

21. Procédé selon la revendication 9, dans lequel le matériau pour le noyau est un polymère thermoplastique contenant des charges ayant des charges incluant des oxydants servant d'accélérateurs de pyrolyse.

22. Procédé selon la revendication 9, dans lequel le matériau utilisé pour le noyau est un thermoplastique formé.

23. Procédé selon la revendication 9, dans lequel le matériau utilisé pour le noyau est un métal à point de fusion bas.

24. Procédé selon la revendication 23, dans lequel des alliages en métal à point de fusion bas ont des points de fusion inférieurs à 300 °C.

25. Procédé selon la revendication 23, dans lequel les alliages à point de fusion bas sont à base des métaux Al, Zn, Cu, Bi, Pb, Sn, Fe, Sb et Si.

26. Procédé selon la revendication 23, dans lequel les alliages à point de fusion bas sont choisis parmi le bismuth et des alliages de bismuth, des alliages d'étain et des alliages Zn/Mg/Al/Cu.
